Europäisches Patentamt

(19) European Patent Office

Office européen des brevets

(11) Veröffentlichungsnummer: **0 121 804**
**B1**

(12) EUROPÄISCHE PATENTSCHRIFT

(45) Veröffentlichungstag der Patentschrifft:
28.02.90

(51) Int. Cl. $^5$: **G 01 S 13/70**

(21) Anmeldenummer: 84102684.2

(22) Anmeldetag: 12.03.84

(54) Anordnung zur Entfernungsnachführung in einem Folgerader.

(30) Priorität: 15.03.83 DE 3309088

(43) Veröffentlichungstag der Anmeldung:
17.10.84 Patentblatt 84/42

(45) Bekanntmachung des Hinweises auf die Patenterteilung:
28.02.90 Patentblatt 90/09

(84) Bennante Vertragsstaaten:
DE FR GB IT NL

(56) Entgegenhaltungen:
US-A-4 038 657
US-A-4 077 038

ANGEWANDTE INFORMATIK, Band 13, Nr. 5, Mai 1971, Seiten 225-236, Braunschweig, DE; G. VAN KEUK et al.: "Zur Optimierung linearer Zielverfolgungsverfahren"

(73) Patentinhaber: Siemens Aktiengesellschaft
Wittelsbacherplatz 2
D-8000 München 2 (DE)

(72) Erfinder: Hofmann, Josef, Dipl.-Ing.
Jan-Pollack-Strasse 15
D-8000 München 60 (DE)
Erfinder: Büttner, Winfried, Dr.-Ing.
Hunkelestrasse 17
D-8000 München 71 (DE)

# EP 0 121 804 B1

**Beschreibung**

Die Erfindung bezieht sich auf eine Vorrichtung zur Entfernungsnachführung in einem Folgeradar.

Für die Verfolgung von Flugzielen ist die automatische Nachführung des Folgeradars im Seiten- und Höhenwinkel und in der Entfernung erforderlich. Als einzige Signalquelle stehen dafür die vom Ziel reflektierten Echoimpulse zur Verfügung. Durch Flugzeugbewegungen und durch Wanderung des Reflexionspunktes auf der Flugzeugoberfläche werden schnelle und ausgeprägte Intensitätsschwankungen des Zielechos verursacht, die Fehlinformationen über den tatsächlichen Ort des Flugzeuges bewirken. Die Ortungsdaten eines Radargerätes stellen somit mehr oder weniger starke statistische Schwankungen um die wirkliche Zielbahn dar. Es ist bereits bekannt, eine Verbesserung dieser Ortungsdaten durch eine Vorhersage der wahrscheinlichen zukünftigen Bahn mittels Rechengeräten zu erzielen. Eine bekannte Anordnung zur Vorhersageermittlung der Entfernungswerte eines Zielobjektes besteht aus einer sogenannten mechanischen Entfernungswelle, die Bestandteil eines Analogrechners ist. In Analogrechnern können in größerer Anzahl, z. B. zur Nachbildung der Zielgeschwindigkeit oder zur Entfernungsnachführung mechanische Wellen zur Anwendung gelangen. Dazu ist jeder Welle ein Antrieb zuzuordnen, der von einer Steuerspannung gesteuert wird. Derartige Analogrechner beinhalten einen erheblichen Anteil an mechanisch bewegten Bauteilen, die nicht nur ein entsprechend großes Volumen beanspruchen, sondern auch einer ständigen Wartung bedürfen. Außerdem haben die mechanischen Wellen infolge ihrer Trägheit eine nicht vernachlässigbare Verzögerung bei der Signalverarbeitung.

Der Erfindung liegt die Aufgabe zugrunde, ein Entfernungsnachführsystem der eingangs genannten Art in seiner Leistungsfähigkeit zu verbessern und so zu vereinfachen, daß auf mechanische Rechner ganz verzichtet werden kann. Gemäß der Erfindung wird diese Aufgabe durch die in Anspruch 1 angegebenen Merkmale gelöst.

Eine derartige Lösung ermöglicht in Verbindung mit mehreren Nachführalgorithmen die interne Nachbildung der Zieldynamik und die Weitergabe polarer Zielentfernungen digital an eine Zieldatenverarbeitung mittels einer digitalen Entfernungswelle bei gleichzeitiger Verbesserung der Nachführgüte und einer deutlichen Reduzierung der Einschwingzeit. Die Mechanik der bisherigen Entfernungswelle vollständig ersetzt. Die Störanfälligkeit der mechanischen Teile und auch die Nachteile ihrer Massenträgheit werden dadurch völlig beseitigt. Damit verbunden sind der Vorteil der kleineren Aufschaltzeiten und der Vorteil der jederzeit änderbaren Zeitkonstanten. Wegen des vergleichbar geringen Aufwandes für die digitale Nachführeinheit können in Abhängigkeit vom jeweiligen Betriebszustand verschiedene digitale Funktionsblöcke eingesetzt werden. Dabei werden die von einem Digitalrechner der Zieldatenverarbeitung gelieferten digitalen Logiksignale aus Eingangssignalen des Folgeradars und den Schaltbefehlen des Zustandsautomaten für die Einschaltung des jeweiligen Betriebszustandes bestimmt.

Die Bestimmung der Zielentfernung im Betriebszustand der Zielverfolgung wird bei der Erfindung dadurch verbessert, daß zusätzlich zur Radarfehlerspannung die Zielgeschwindigkeit in die Berechnung mit einbezogen wird, derart, daß Radarfehlerspannung und Zielgeschwindigkeit die Eingangssignale der digitalen Entfernungsnachführung darstellen.

Die digitale Nachführeinheit mit der Steuerschaltung ist schaltungsmäßig zwischen dem Zielfolgeradar und einer Zieldatenverarbeitung angeordnet. Die Verbindung mit dem Zielfolgeradar erfolgt über ein Interface als Koppelglied, in dem die Analog-Digitalwandlung der Entfernungsfehlergröße des Folgeradars, die Digitalanalogwandlung der Schnittstellensignale, die Glättung der Entfernungsfehlerspannung und die entfernungsabhängige Aufbereitung eines 150 kHz-Referenzsignals für eine Entfernungseingabe. Die Einschaltung eines Funktionsblocks erfolgt in zeitlich aufeinanderfolgenden Betriebszuständen, von denen der erste die Aufschaltphase nach der Zielentdeckung darstellt. In dieser Phase folgt die Bestimmung der Zielentfernung aus der vom Folgeradar gelieferten Fehlerspannung.

Durch ein Logiksignal ausgelöst beginnt die Verfolgungsphase mit der Entfernungsinformation, in der bis zum nächsten Schaltbefehl die Glättung der Radialgeschwindigkeit $\dot{e}$ durchgeführt wird.

Wenn während der Phase "Verfolgen" durch Bildung einer Steuerspannung aus der Entfernungsfehlerspannung die Glättung eingelaufen ist, kann es sich als zweckmäßig erweisen, eine Zwischenphase einzuschalten, bevor sich eine weitere Phase "Verfolgen mit Zielgeschwindigkeit" anschließt. In der Zwischenphase wird kurzzeitig die Verfolgung mit einer von der Entfernungsfehlerspannung und der geglätteten Zielgeschwindigkeit abgeleiteten Steuerspannung in zwei parallel geschalteten digitalen Reglern durchgeführt.

Nach dieser Zwischenphase werden bei der Lösung unter Verwendung von Reglern die Fehlerspannung $\varepsilon$ und die geglättete Radialgeschwindigkeit $\dot{e}$ über je einen eigenen Regler und ein gemeinsames Summationsglied an eine Regelstrecke geführt, deren Zeitkonstante der Quadratwurzel aus der Zielentfernung proportional ist. Bei Realisierung der Lösung unter Verwendung von rekursiven Filtern wird die Fehlerspannung und die Zielgeschwindigkeit mit unterschiedlicher Wichtung über einen Addierer an ein rekursives Filter gegeben.

Die Erfindung und weitere Einzelheiten der Erfindung werden anhand der Figuren 1 bis 13 näher erläutert. Es zeigen

- Fig. 1 das Prinzip der Entfernungsnachführung mit einer digitalen Welle,
- Fig. 2 die innere Struktur der digitalen Entfernungsnachführung,
- Fig. 3 das Grundprinzip der durch eine Regelschaltung realisierten digitalen Welle,
- Fig. 4 bis 8 die Ausbildung der Regelschaltung im jeweils vorliegenden Betriebszustand der digitalen Entfernungsnachführung,
- Fig. 9 bis 12 die Verwendung von rekursiven Filtern zur Realisierung der digitalen Entfernungswelle während der verschiedenen Betriebszustände,

2

EP 0 121 804 B1

– Fig. 13 die Entfernungsnachführgröße e in Abhängigkeit von den aufeinanderfolgenden Betriebszuständen.

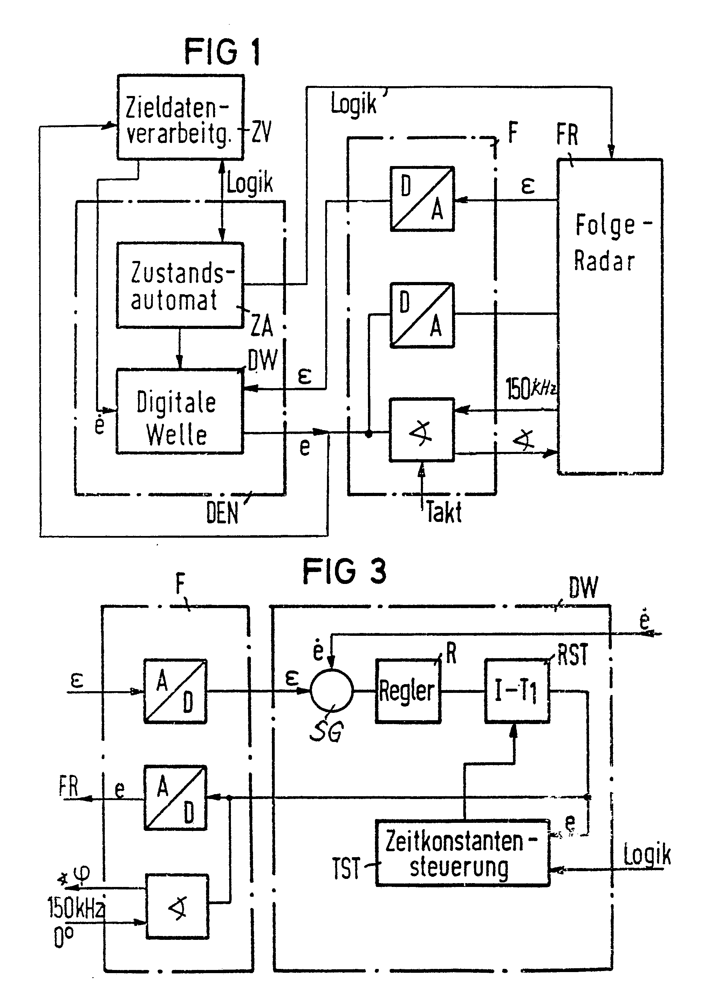

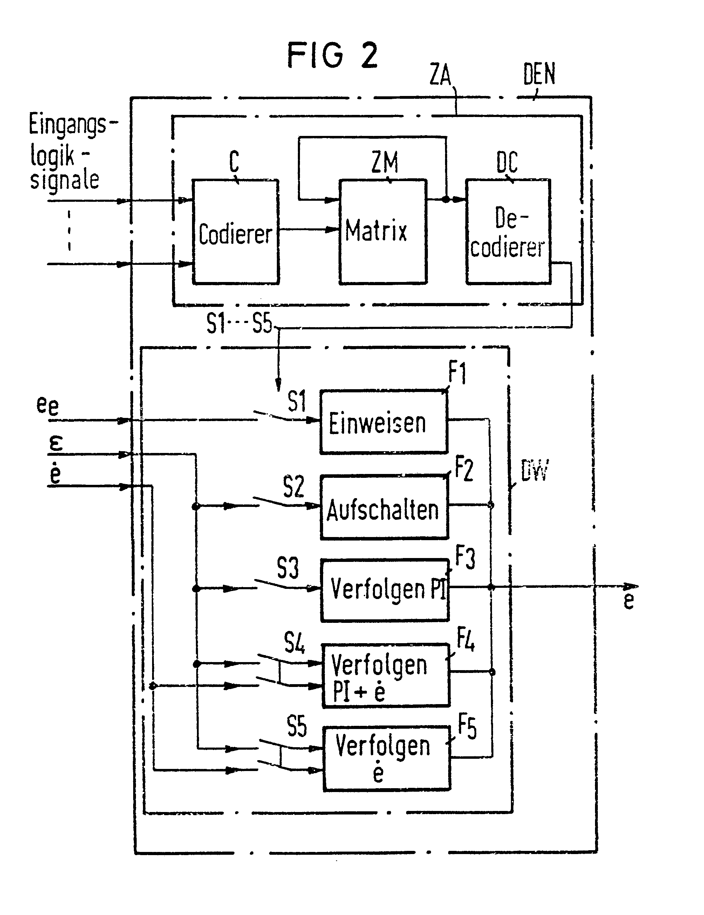

Die Fig. 1 zeigt eine über ein Interface F an ein Zielfolgeradar FR angekoppelte digitale Entfernungsnachführeinrichtung DEN mit einer Zieldatenverarbeitung ZV. Die digitale Entfernungsnachführeinrichtung ist dabei unterteilt in eine als digitale Entfernungswelle bezeichenbare Nachführeinheit DW und in einen Zustandsautomaten ZA. Das zur Ankopplung an das Folgeradar FR zwischengeschaltete Interface F besteht aus einem Analog-Digitalwandler für die analogen Entfernungsfehlerspannungen ε des Folgeradars, einem Digital-Analogwandler für Schnittstellensignale zum Folgeradar und aus einem Phasenschieber für eine 150 kHz-Rechteckspannung. Der Zustandsautomat ZA erhält eingangsseitig Logik-Signale von der Zieldatenverarbeitung ZV, von denen über einen Codierer C (Fig. 2) in einer als Kernspeicher ausgebildeten Matrix M und einem Decodierer eine Folge von Schaltbefehlen S1 bis S5 für die Umschaltung der einzelnen Betriebszustände der digitalen Welle abgeleitet werden.

Die Entfernungsnachführeinrichtung DEN bildet intern die Zieldynamik nach und gibt die exakte polare Zielentfernung digital an die Zieldatenverarbeitung ZV weiter. Die Zieldatenverarbeitung beinhaltet eine Koordinatentransformation und eine Filterung. Sie bildet die geglättete Radialgeschwindigkeit $\dot{e}$ für die digitale Entfernungswelle DW. Die Filteralgorithmen sowie die Nachbildung der mechanischen Entfernungswelle sind im digitalen Nachführrechner, der Teil der Zieldatenverarbeitung ist, unter Berücksichtigung der verschiedenen Betriebsarten implementiert.

Der funktionelle Ablauf der Entfernungsnachführung durch die digitale Entfernungswelle wird anhand der Fig. 2 erläutert. Zur Durchführung erhält die digitale Welle DW die digitalisierte Entfernungs-Fehlerspannung ε vom Folgeradar FR, die geglättete Radialgeschwindigkeit $\dot{e}$ und die Schaltbefehle des Zustandsautomaten ZA. Die digitale Welle DW enthält Funktionsblöcke "Einweisen" F1, "Aufschalten" F2, "Verfolgen PI" F3, "Verfolgen PI + $\dot{e}$" F4 und "Verfolgen $\dot{e}$" F5, die über steuerbare Schalter S1 bis S5 fortlaufend mit S1 beginnend einschaltbar sind. Die Steuerung der Einschaltung der Funktionsblöcke, die den Betriebsarten der digitalen Entfernungswelle entsprechen, erfolgt mittels der Schaltbefehle des Zustandsautomaten ZA. Der Ausgang der digitalen Entfernungswelle liefert die Entfernung e. Die einzelnen Funktionsblöcke der digitalen Welle werden durch unterschiedlich geschaltete Regelkreise realisiert. In Abhängigkeit von der an die Entfernungsspannung e gestellten Genauigkeit kann die Nachbildung in der digitalen Welle in verschiedenen Phasen der Betriebsart "Verfolgen" abgebrochen werden.

Bei der Einweisung eines Zieles wird der von einem Steuerknüppel oder einer Rollkugel eingelesene Entfernungswert ee in einem RC-Glied mit einer Zeitkonstante von z. B. 150 ms vorgeglättet und an das Folgeradar FR ausgegeben.

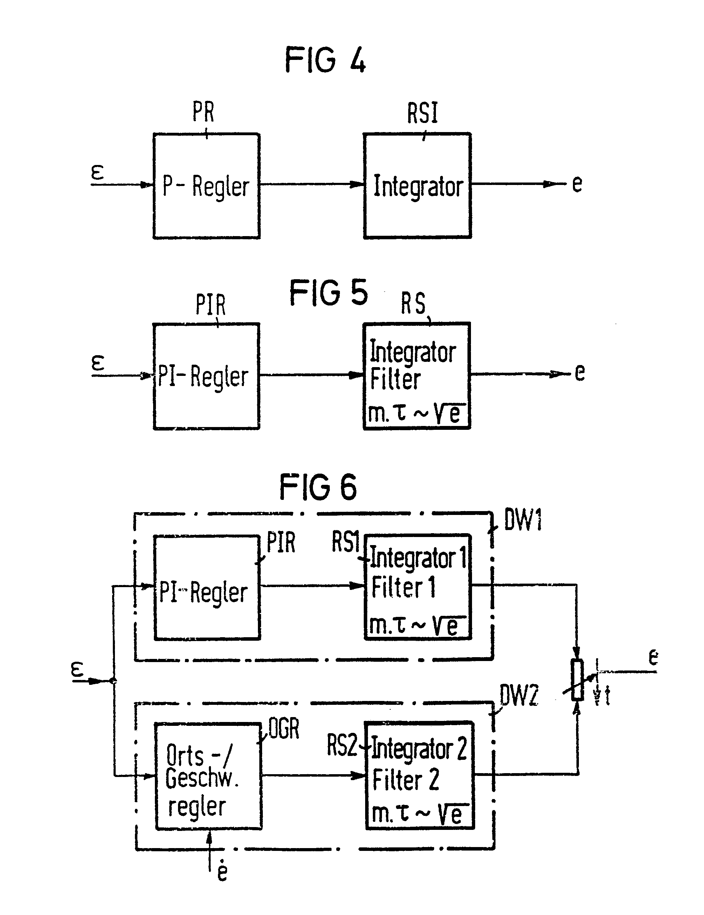

Im Betriebszustand der Aufschaltung besteht der Funktionsblock, d.h. die digitale Welle, aus einem Proportionalregler und einer Regelstrecke, die von einem Integrator gebildet wird. Die Entfernungsfehlerspannung ε wird dem Proportionalregeler PR eingangsseitig zugeführt und der Ausgang des Integrators RSI liefert die Entfernung e. Der Verstärkungsfaktor des Proportionalreglers PR und die Steilheit des Integrators RSI sind gleich 1 gesetzt. Folglich wird in jedem Zeittakt die gesamte Fehlerspannung abgebaut. Das Blockschaltbild des Funktionsblockes "Aufschalten" ist in Fig. 4 dargestellt.

Nach Abschluß der Aufschaltphase wird in einem weiteren Betriebszustand durch Schließen des Schalters S3 die Entfernung e in der digitalen Welle mittels eines Proportionalreglers mit integralem Verhalten PIR und einer Regelstrecke gebildet. Die geglättete Radialgeschwindigkeit $\dot{e}$ ist zu diesem Zeitpunkt noch nicht vorhanden. Die Regelstrecke setzt sich hier aus einem Integrator mit einer mittleren Integrationssteilheit und einem Filter zusammen, dessen Zeitkonstante proportional der Wurzel aus der Entfernung nach oben bzw. nach unten geändert wird.

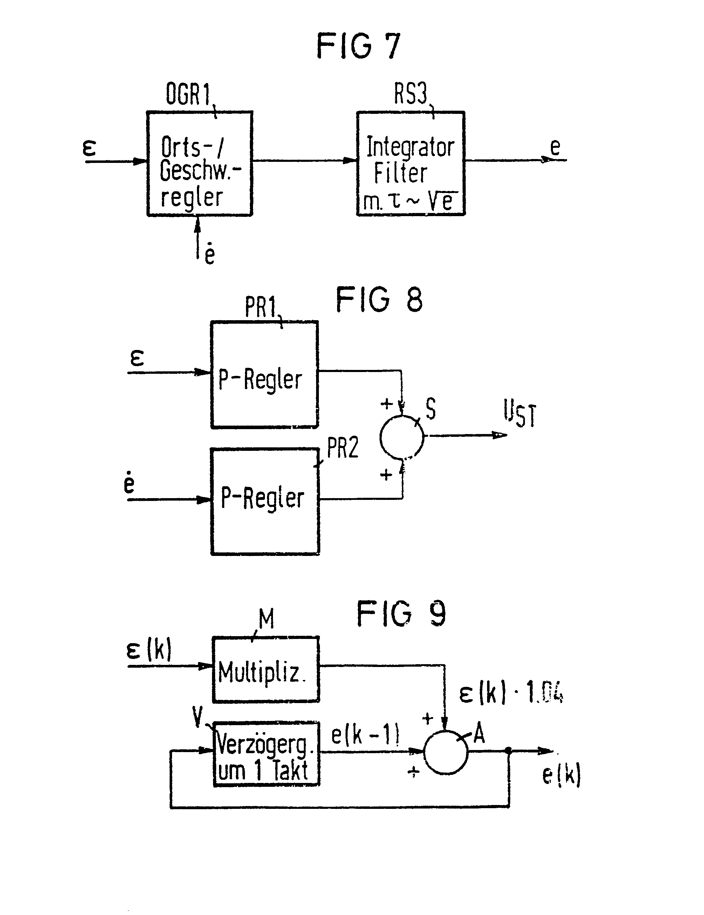

Liegt im nächsten Betriebszustand der, durch den Schalter S4 eingeschaltet wird, die geglättete vom Rechner der Zieldatenverarbeitung ZV gelieferte Radialgeschwindigkeit $\dot{e}$ vor, so werden in einer Übergangsphase von z. B. 10 Takten, zwei digitale Wellen parallel gefahren. Im ersten Takt dieser Übergangsphase entspricht die am Ausgang erhaltene Entfernungsspannung der Entfernungsspannung der digitalen Welle DW1 die in ihrem Aufbau dem der digitalen Welle im vorhergehenden Betriebszustand entspricht. Der untere Schaltungszweig in Fig. 6, die dem Aufbau des vorliegenden Betriebszustandes entspricht, enthält die Schaltung der digitalen Welle DW2, in der ein Ortsgeschwindigkeitsregeler OGR mit einer Regelstrecke in Reihe geschaltet ist, die der Regelstrecke der digitalen Welle DW1 entspricht. Die Ausgänge der beiden digitalen Wellen DW1 und DW2 sind über einen zeitabhängigen Mischer zusammengeschaltet.

Nach Beendigung der Übergangsphase erfolgt die Umschaltung auf den letzten Betriebszustand mittels des Schalters S5 (Fig. 2) . Die jetzt wirksame digitale Welle (Fig. 7) entspricht in ihrem Aufbau der digitalen Welle DW2 im vorhergehenden Betriebszustand (Fig. 6) und besteht aus einem Orts-/ Geschwindigkeitsregler OGR und einer Regelstrecke. Wie aus Fig. 8 für diese digitale Welle ersichtlich, besteht der Orts-/ Geschwindigkeitsregeler OGR aus zwei Proportionalreglern PR1 und PR2, denen eingangsseitig die Fehlerspannung ε und die Radialgeschwindigkeit $\dot{e}$ zugeführt wird. An einem an die beiden Regler ausgangsseitig angeschlossenen Summationsglied S wird aus der Fehlerspannung und der geglätteten Radialgeschwindigkeit $\dot{e}$ eine Steuerspannung $U_{ST}$ für die Entfernungsnachführung gebildet.

Die Steuerspannung zur Entfernungsnachführung kann auch bereits in einem früheren Betriebszustand abgenommen werden.

In verallgemeinerter Form bestehen die Funktionsblöcke nach Fig. 2, die den jeweils eingeschalteten Betriebszustand symbolisieren, aus einer in Fig. 3 angedeuteten Grundschaltung der digitalen Entfernungswelle DW. Als wesentliche Bestandteile dieser Grundschaltung sind ein oder mehrere Regler R, eine nachgeschaltete

3

Regelstrecke RST, die einen Integrator und Filter mit veränderbarer Zeitkonstante enthalten kann, eine Zeitkonstantensteuerung TST und ein Summationsglied SG dargestellt. Die Verbindung zu einem Folgeradar FR, dessen Entfernungswerte nachgeführt werden sollen, erfolgt über ein bereits beschriebenes Interface F. Über das Interface F wird der digitalen Welle DG die Entfernungs-Fehlerspannung $\varepsilon$ zugeführt. Die Zeitkonstantensteuerung für die Regelstrecke RST erfolgt über Logiksignale, die in Abhängigkeit von einem Nachführalgorithmus im Digitalrechner gebildet werden. Nach Vorliegen der geglätteten Radialgeschwindigkeit $\dot{e}$ in der Zieldatenverarbeitung ZV (Fig. 1) wird diese über das Summationsglied SG dem Regler R zugeführt.

Die Erfindung läßt sich bei gleichzeitiger Vereinfachung der Schaltung auch dadurch realisieren, daß die Regelkreise des oben beschriebenen Ausführungsbeispiels in geeigneter Weise durch rekursive Filter ersetzt werden. Das Grundkonzept der digitalen Entfernungsnachführung mit einer digitalen Welle und einer Zieldatenverarbeitung, die einen Nachführrechner enthält, bleibt dabei unverändert.

Ein Ausführungsbeispiel zur Realisierung der digitalen Entfernungsnachführung unter Verwendung von rekursiven Digitalfiltern wird nachfolgend beschrieben.

Die Erzeugung einer Entfernungsnachführgröße aus der Fehlergröße $\varepsilon$ erfolgt wie im vorhergehenden Ausführungsbeispiel in mehreren aufeinanderfolgenden Betriebszuständen. Das Einweisen eines Zieles erfolgt in einem gegenüber dem vorbeschriebenen Ausführungsbeispiel unveränderten Vorgang.

Die Grundschaltung der digitalen Entfernungswelle beinhaltet in allen folgenden Betriebszuständen Multiplizierer, Addierer und Verzögerungsglieder, die durch digitale Logiksignale gesteuert werden.

Die Grundfunktionen und die innere Struktur der Entfernungsnachführung, wie sie anhand der Figuren 1 und 2 beschrieben wurden, bleiben im Prinzip unverändert. An die Stelle der Regelschaltungen in den Funktionsblöcken F1 bis F5, die den verschiedenen Betriebszuständen zugeordnet sind, treten in diesem Ausführungsbeispiel die rekursiven Digitalfilter.

Der Vorgang "Einweisen" im ersten Betriebszustand ist gegenüber dem ersten Ausführungsbeispiel unverändert. Im folgenden Betriebszustand "Aufschalten" (Fig. 9) besteht die digitale Welle aus einer Additionsschaltung, in der einem Addierer A die in einem Multiplizierer M gewichtete Fehlergröße $\varepsilon$ und die vom Ausgang des Addierers A über ein Verzögerungsglied V zurückgeführte und um eine Taktperiode verzögerte Entfernungsfehlergröße e zugeführt wird. Nach einer im Multiplizierer M durchgeführten Wichtung der Fehlergröße ergibt sich mit dem Algorithmus

$$e(k) = 1,04 \cdot \varepsilon(k) + e(k-1) \tag{1}$$

die vorläufige Nachführgröße. Mit k ist der Zeittakt bezeichnet; (k - 1) ist der um einen Takt verzögerte Takt.

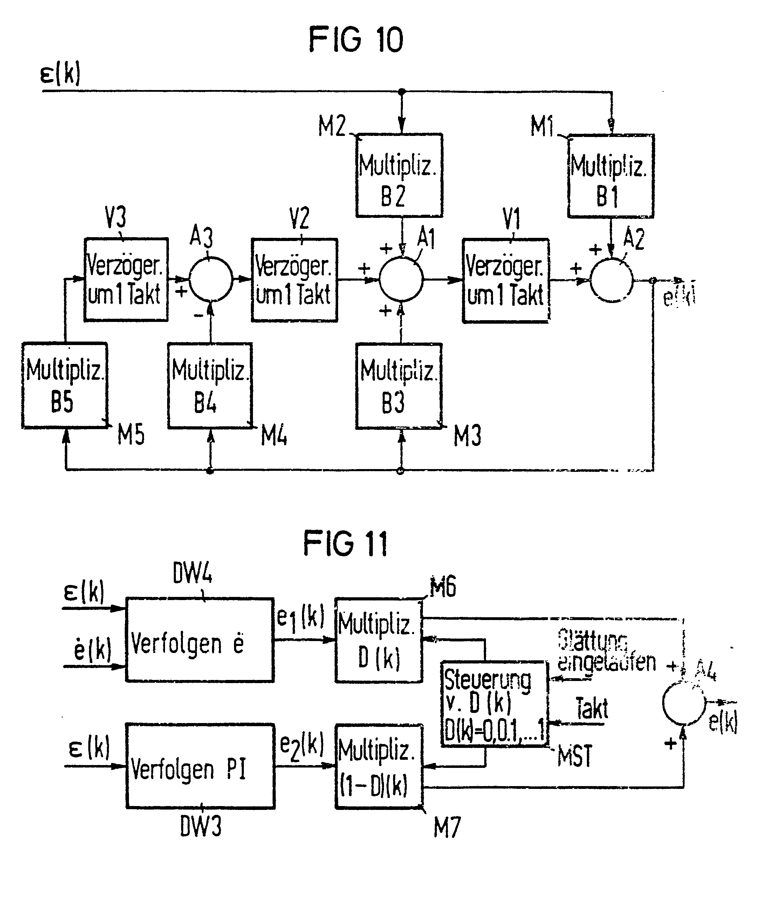

Im nächsten Betriebszustand (Fig. 10) "Verfolgen" wird die digitale Welle aus einem mehrstufigen rekursiven Filter gebildet, das zwei parallele Eingänge mit je einem Multiplizierer M1, M2 und einer Additionsstufe A1, A2 sowie drei Rückführungszweige aufweist. Der Ausgang des ersten Addierers A1 ist über ein Verzögerungsglied V1 mit einem Eingang des zweiten Addierers A2 verbunden. Vom Ausgang des Addierers A2, der die Entfernungsnachführgröße e führt, ist ein erster Rückführungszweig über einen Multiplizierer M3 mit einem zweiten Eingang des ersten Addierers A1 verbunden. Die zweite Rückführungsschleife ist über den Multiplizierer M4, einen Addierer A3 und ein weiteres Verzögerungsglied V2 an den dritten Eingang des Addierers A1 geführt. Die dritte Rückführungsschleife schließt sich über einen Multiplizierer M5 ein weiteres Verzögerungsglied V3 und einen weiteren Eingang des Addierers A3. Im Addierer A3 wird das Signal über die zweite Rückführung vom Signal über die dritte Rückführung subtrahiert. Alle Verzögerungsglieder bewirken eine Verzögerung um eine Taktperiode. In diesem Betriebszustand wird die Nachführgröße e nach folgendem Nachführalgorithmus bestimmt:

$$e(k) = B1 \cdot \varepsilon(k) + B2 \cdot \varepsilon(k-1) + B3 \cdot e(k-1) - B4 \cdot e(k-2) + B5 \cdot e(k-3) \tag{2}$$

Die Parameter B1 bis B5 dieser Gleichung werden nach folgenden e-Funktionen in Abhängigkeit vom Zeittakt TO und mit T2 als Zeitkonstante bestimmt:

$$B1 = \frac{5}{6 \cdot T2 \cdot \sqrt{6}} \cdot (1 - e^{-TO/T2}) + \frac{TO}{6 \cdot T2^2 \cdot \sqrt{6}}$$

$$B2 = -\frac{5}{6 \cdot T2 \cdot \sqrt{6}} \cdot (1 - e^{-TO/T2}) - \frac{TO}{6 \cdot T2^2 \sqrt{6}} \cdot e^{-TO/T2}$$

$$B3 = 2 + e^{-TO/T2}$$

$$B4 = 1 + 2e^{-TO/T2}$$

$$B5 = e^{-TO/T2}$$

Der Zeittakt kann mit TO = 40 ms und die Zeitkonstante T2 = 150 ms angenommen werden.

Im folgenden Betriebszustand werden vorübergehend zwei Entfernungsnachführgrößen $e_1$ und $e_2$ in parallelen

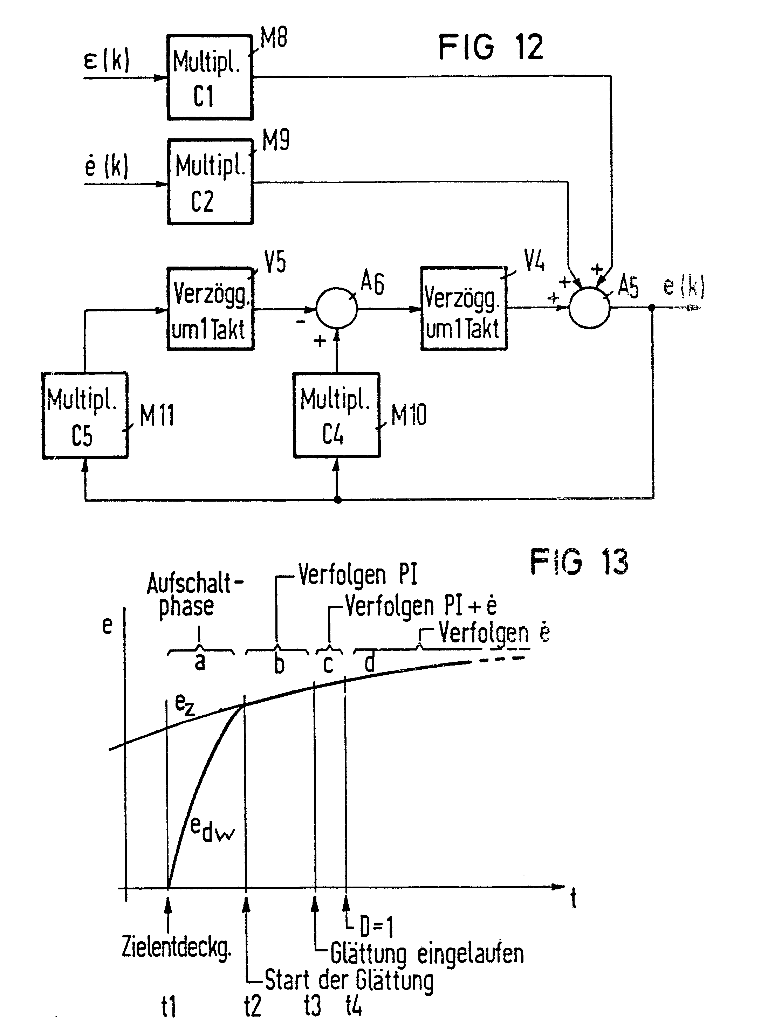

Entfernungswellen gebildet (Fig. 11). Eine dieser Schaltungen, die dem Betriebszustand "Verfolgen" mit der Fehlergröße gemäß Fig. 10 entspricht, ist in Fig. 11 mit DW3 bezeichnet. Die parallele Schaltung DW4 entspricht einer digitalen Welle, die einem weiteren späteren Betriebszustand zugeordnet ist und die in der nachfolgenden Beschreibung der Fig. 12 näher erläutert wird. Die Entfernungsnachführgrößen $e_1$ und $e_2$ dieser beiden Schaltungen werden nach Wichtung mittels der Multiplizierer M6 und M7 in einem Addierer A4 addiert. Die Wichtung in den Multiplizierern M6 und M7 erfolgt in Abhängigkeit von einer Steuerung MST. Die Nachführgröße $e_2$ entspricht dem Algorithmus nach Gleichung (2), die Nachführgröße $e_1$ der Gleichung. (3) (siehe unten).

$$e_1(k) = e(k) \text{ nach Gleichung (3)}$$

$$e_2(k) = e(k) \text{ nach Gleichung (2)}$$

Unter Berücksichtigung der Wichtung mittels der Multiplizierer M6, M7 ergibt sich als zeitabhängige resultierende Nachführgröße

$$e(k) = e_1(k) \cdot D(k) + e_2(k) \cdot (1 - D(k)) \tag{4}$$

Darin stellt D(k) eine linear ansteigende Funktion dar

$$D(k) = 0, 0.1, \ldots 1,0$$

Am Ende der Übergangsphase ist ein Betriebszustand erreicht, der dem letzten letzten Betriebszustand "Verfolgen mit $\dot{e}$" entspricht. Die in diesem Betriebszustand wirksame digitale Welle ist in Fig. 12 dargestellt. Das zweistufige rekursive Filter, das in diesem Betriebszustand als digitale Welle wirksam ist, arbeitet eingangsseitig mit der Fehlergröße $\varepsilon$ und mit der geglätteten Radialgeschwindigkeit $\dot{e}$. Beide Eingangsgrößen gelangen über je einen Multiplizierer M8 und M9 an je einen Eingang eines Addierers A5. Der Ausgang dieses Addierers liefert die Entfernungsnachführgröße e. Eine zweifache Rückführung vom Ausgang des Addierers erfolgt über die Multiplizierer M10 und M11 in je einer eigenen Rückführung. In dieser letzten Phase bestimmt sich die Nachführgröße aus dem Algorithmus

$$e(k) = C1 \cdot \varepsilon(k) + C2 \cdot \dot{e}(k) + C4 \cdot 2(k - 1) - C5 \cdot e(k - 2) \tag{3}$$

Für die Parameter C1 und C2 ergeben sich aus

$$C1 = P1 \cdot C3 \text{ und } C2 = P2 \cdot C3.$$

Darin bedeutet

$$C3 = \frac{1 - e^{-TO/T1}}{185\tau}; \qquad C4 = 1 + e^{-TO/T1}; \qquad C5 = e^{-TO/T1}$$

mit T1 = T2

Die Zeitkonstante $\tau$ ist der Quadratwurzel aus der Entfernung e proportional. Mit den Werten der Parameter

$$P1 = 8,5 \text{ und } P2 = 7,4 \cdot \tau$$

errechnen sich die Wichtungen in der Schaltung nach Fig. 12

$$C1 = 8,5 \cdot \frac{1 - e^{-TO/T1}}{185\tau}; \qquad C2 = 7,4 \cdot \frac{1 - e^{-TO/T1}}{185\tau}$$

In Fig. 13 wird anhand eines Diagramms der zeitliche Ablauf der Erzeugung der Entfernungsnachführgröße während der einzelnen Betriebszustände erläutert. Auf der Zeitachse t sind nacheinander mit t1 bis t4 der Zeitpunkt des Beginns des jeweils vorliegenden Betriebszustandes dargestellt.

t1 = Beginn der Aufschaltphase
t2 = Beginn der Phase "Verfolgen" PI
t3 = Phase "Verfolgen" mit PI + $\dot{e}$ (Übergangsphase)
t4 = Beginn der letzten Phase "Verfolgen" mit $\dot{e}$

Dementsprechend sind die Abschnitte, die den Verlauf der Entfernungsnachführgröße e in Abhängigkeit von der Zeit t wiedergeben, nacheinander in der gleichen Reihenfolge mit a bis d bezeichnet. Im ersten Teil des Diagramms ist die Entfernungsnachführgröße e in zwei Äste aufgespalten, von denen der eine Ast dem Entfernungswert $e_z$ eines entdeckten Zieles entspricht und ein zweiter Ast die vom Zeitpunkt der Zielentdeckung während der Aufschaltphase von der digitalen Entfernungswelle gelieferte Entfernungsnachführgröße $e_{dw}$ darstellt. Der Zeitpunkt der Zielentdeckung, der dem Beginn der Aufschaltphase a entspricht, ist mit t1 bezeichnet. Etwa zum Zeitpunkt t2 sind die beiden Werte $e_z$ und $e_{dw}$ zu einer Kurve zusammengelaufen. Dieser Zeitpunkt ist der Beginn des Betriebszustandes "Verfolgen" (b) nach Einschaltung des Funktionsblockes F3 (Fig. 2) und der Start der Glättung der Radialgeschwindigkeit $\dot{e}$. Der Zeitpunkt t3 kennzeichnet den Beginn der Übergangsphase c. Die Glättung ist jetzt eingelaufen. Zum Zeitpunkt t4 beginnt die letzte Phase d "Verfolgen" mit der geglätteten Radialgeschwindigkeit $\dot{e}$.

Wie aus diesem Diagramm ersichtlich, kann z. B. die Bildung der Entfernungsnachführgröße mittels einer digitalen Welle gegebenenfalls bereits zum Zeitpunkt t3 als ausreichend angesehen werden.

**Patentansprüche**

1. Vorrichtung zur Erzeugung eines Entfernungsnachführungssignals (e) für ein Folgeradar (FR), welches ein Entfernungsfehlersignal ($\varepsilon$) abgibt, mit

- einer Zieldatenverarbeitung (ZV),
- einer das Entfernungsfehlersignal erhaltenden Nachführeinheit (DW) zur Ermittlung des Entfernungsnachführsignals,
- einer Einrichtung ($F_1$) zur Vorgabe eines Anfangswerts ($e_e$) der Zielentfernung für das Folgeradar,
  dadurch gekennzeichnet, daß
- die Nachführeinheit (DW) mehrere digitale Funktionsblöcke ($F_2$ - $F_5$) aufweist, von denen jeder zur Ermittlung des Entfernungsnachführsignals nach einer jeweils anderen funktionalen Abhängigkeit letzteren Signals entweder vom Entfernungsfehlersignal allein oder vom Entfernungsfehlersignal sowie einem von der Zieldatenverarbeitung gelieferten, die Radialgeschwindigkeit repräsentierenden Signal ($\dot{e}$) ausgebildet ist,
- eine digitale Steuerschaltung (ZA) zur Aktivierung der Einrichtung ($F_1$) oder jeweils eines der Funktionsblöcke ($F_2$ - $F_5$) nach Maßgabe eines von der Zieldatenverarbeitung gelieferten Logiksignals vorgesehen ist.

2. Vorrichtung nach Anspruch 1, dadurch gekennzeichnet, daß jeder Funktionsblock ($F_2$ - $F_5$) eine eine Reglerschaltung (PR, PIR, OGR, OGR1) und eine Regelstreckeneinrichtung (RSI, RS, RS1, RS2, RS3) enthaltende Regelschaltung mit jeweils unterschiedlicher Regelcharakteristik aufweist.

3. Vorrichtung nach Anspruch 1, dadurch gekennzeichnet, daß jeder Funktionsblock ($F_2$ - $F_5$) aus einer rekursiven Filterschaltung mit jeweils unterschiedlicher Filtercharakteristik besteht.

**Claims**

1. Device for generating a range acquisition signal (e) for a tracking radar (FR), which outputs a range error signal ($\varepsilon$), comprising

- a target data processing system (ZV)
- an acquisition unit (DW) receiving the range error signal for determining the range correction signal,
- a device ($F_1$) for presetting an initial value ($e_e$) of the target range for the tracking radar
  characterised in that
- the acquisition unit (DW) exhibits several digital function blocks ($F_2$ - $F_5$), each of which is constructed for determining the range correction signal in accordance with an in each case different functional dependence of the latter signal either on the range error signal alone or on the range error signal and a signal ($\dot{e}$) supplied by the target data processing system and representing the radial velocity,
- a digital control circuit (ZA) for activating the device ($F_1$) or in each case one of the function blocks ($F_2$ - $F_5$) as determined by a logic signal supplied by the target data processing system.

2. Device according to Claim 1, characterized in that 25 each function block ($F_2$ - $F_5$) exhibits a closed-loop control circuit containing a controller circuit (PR, PIR, OGR, OGR1) and a controlled system device (RSI, RS, RS1, RS2, RS3) having in each case a different control characteristic.

3. Device according to Claim 1, characterized in that each function block ($F_2$ - $F_5$) consists of a recursive filter circuit having in each case a different filter characteristic.

**Revendications**

1. Dispositif pour élaborer un signal d'asservissement de la distance (e) pour un radar de poursuite (FR) qui délivre un signal d'erreur de distance (e), comprenant

- un système de traitement de données de la cible (ZV),

- une unité d'asservissement (DW) recevant le signal d'erreur de la distance et servant à déterminer le signal d'asservissement de la distance,
- un dispositif (F1) pour donner à l'avance une valeur de départ ($e_\theta$) de la distance de la cible pour le radar de poursuite,
caractérisé en ce que
- l'unité d'asservissement (DW) comporte plusieurs blocs fonctionnels numériques (F2 - F5) qui sont chacun réalisés en vue de la détermination du signal d'asservissement de la distance, selon une dépendance fonctionnelle chaque fois différente de ce dernier signal, soit du signal d'erreur de distance seul, soit du signal d'erreur de la distance ainsi que d'un signal (è) fourni par le système de traitement de données de la cible et représentant la vitesse radiale,
- un circuit de commande numérique (ZA) pour activer le dispositif (F1) ou l'un ces blocs fonctionnels (F2 - F5) en fonction d'un signal logique délivré par le système de traitement des données de la cible.

2. Dispositif selon la revendication 1, caractérisé en ce que chaque bloc fonctionnel (F2 - F5) comprend un circuit de réglage contenant un circuit régulateur (PR, PIR, OGR, OGR1) et un système réglé (RSI, RS, RS1, RS2, RS3), ayant une caractéristique de réglage différente pour chaque bloc fonctionnel.

3. Dispositif selon la revendication 1, caractérisé en ce que chaque bloc fonctionnel (F2 - F5) est formé d'un circuit de filtrage récursif présentant une caractéristique de filtrage différente pour chaque bloc fonctionnel.

# FIG 1

# FIG 3

# FIG 2

# FIG 4

PR

$\varepsilon$ → [ P - Regler ] → RSI [ Integrator ] → e

# FIG 5

PIR

$\varepsilon$ → [ PI - Regler ] → RS [ Integrator Filter $m.\tau \sim \sqrt{e}$ ] → e

# FIG 6

DW1

[ PI - Regler (PIR) ] → RS1 [ Integrator 1 Filter 1 $m.\tau \sim \sqrt{e}$ ]

$\varepsilon$ →

DW2

[ Orts -/ Geschw. regler (OGR) ] → RS2 [ Integrator 2 Filter 2 $m.\tau \sim \sqrt{e}$ ]

→ e

t

$\dot{e}$

# FIG 7

ε → ┌─────────┐ OGR1 → ┌─────────┐ RS3 → e
     │ Orts-/  │        │Integrator│
     │ Geschw.-│        │ Filter   │
     │ regler  │        │ m. τ ~ √e̅│
     └─────────┘        └─────────┘
         ↑
         ė

# FIG 8

ε → ┌─────────┐ PR1
    │ P-Regler│ ──┐
    └─────────┘   │ +
                  ↓  ⊙ S → U$_{ST}$
ė → ┌─────────┐   │ +
    │ P-Regler│ ──┘
    └─────────┘ PR2

# FIG 9

ε(k) → ┌──────────┐ M ──┐
       │ Multipliz.│    │ ε(k)·1.04
       └──────────┘     ↓ +
V      ┌──────────┐     ⊙ A → e(k)
   ┌─→ │ Verzögerg.│ e(k-1) ↑ +
   │   │ um 1 Takt │
   │   └──────────┘
   └───────────────────────┘

## FIG 10

## FIG 11

# FIG 12

$\varepsilon(k)$ → | Multipl. C1 | M8

$\dot{e}(k)$ → | Multipl. C2 | M9

| Verzögg. um1Takt | V5

A6

| Verzögg. um1Takt | V4

A5   $e(k)$

| Multipl. C5 | M11

| Multipl. C4 | M10

# FIG 13

Aufschalt-phase

Verfolgen PI

Verfolgen PI + $\dot{e}$

Verfolgen $\dot{e}$

a   b   c   d

e

$e_Z$

$e_{dw}$

Zielentdeckg.

Start der Glättung

Glättung eingelaufen

D = 1

t1   t2   t3   t4

t